# EUROPÄISCHE PATENTANMELDUNG

(11) **EP 1 788 571 A1**
(43) Veröffentlichungstag der Anmeldung: **23.05.2007**
(21) Anmeldenummer: 06123908.3
(22) Anmeldetag: 13.11.2006
(51) Int. Cl.: G11B 27/00, G11B 27/10, G11B 27/11

(54) **Audioanlage mit einer Vorrichtung zur Einstellung eines persönlichen Musikprofils**

(30) Priorität: 16.11.2005 DE 102005054585
(71) Anmelder: ROBERT BOSCH GMBH, 70442 Stuttgart (DE)
(72) Erfinder: Koch, Hartwig, 31139 Hildesheim (DE); Mauler, Karsten, 38159 Vechelde (DE); Balkema, Jan Wietse, 31139 Hildesheim (DE)

(57) **Zusammenfassung**

Um eine Audioanlage (100) zur Wiedergabe von Musiktiteln mit einem Datenspeicher (10) für die Musiktitel, einer Eingabeeinrichtung (11) zur Auswahl der Musiktitel, einer Bewertungseinrichtung (13) für die Musiktitel und einer Ausgabeeinrichtung (12) zur Wiedergabe der Musiktitel zu schaffen, die einem Nutzer einen erhöhten Nutzungskomfort bietet ist vorgeschlagen, dass der Audioanlage (100) eine Vorrichtung (14) zur Vorgabe von Kriterien zur Auswahl von Musiktiteln zuordenbar ist.

## Beschreibung

### Technisches Gebiet

Die Erfindung betrifft eine Audioanlage zur Wiedergabe von Musiktiteln mit einem Datenspeicher für die Musiktitel, einer Eingabeeinrichtung zur Auswahl der Musiktitel, einer Bewertungseinrichtung für die Musiktitel und einer Ausgabeeinrichtung zur Wiedergabe der Musiktitel.

### Stand der Technik

Audioanlagen wie unter anderem Autoradios, Stereoanlagen, tragbare CD- oder MP3-Player oder ein normaler PC mit Lautsprechern verfügen über einen Datenspeicher in dem die vom Nutzer eingespeicherten Musiktitel, Lieder und dergleichen hinterlegt sind. Im Folgenden ist unter dem Begriff Musiktitel nicht nur ein Lied sondern auch alle anderen Arten von aufgezeichneter Sprache, Tönen, Geräuschen oder dergleichen zu verstehen, insbesondere die einzelnen Abschnitte eines Hörbuchs.

Besonders in Computern und an sich bekannten MP3-Playern werden die Musiktitel als Datensatz in einem bestimmten Datenformat, beispielsweise dem MP3-Format, hinterlegt, um auf einem Datenträger eine große Anzahl verschiedener Musiktitel speichern und nach Wunsch auch wieder löschen bzw. überschreiben zu können.

Üblicherweise legt ein Nutzer die Musiktitel unter anderem nach Interpreten, Liedtiteln, Veröffentlichungsdatum oder Musikrichtung geordnet in verschiedenen Unterverzeichnissen ab, um in einfacher Weise einen von ihm gewünschten Musiktitel wieder auffinden zu können. Hierbei ist es ebenfalls möglich, dass der Nutzer vor dem Beginn des Hörens eine sogenannte "Playlist" erstellt, die von der Audioanlage nach und nach abgearbeitet wird, so dass der Nutzer nacheinander die von ihm gewünschten Musiktitel hört.

Zur Wiedergabe der gewünschten Musiktitel verfügt die Audioanlage über eine Ausgabeeinrichtung. Diese kann entweder nur in einer Schnittstelle bestehen, um beispielsweise einen separaten Verstärker mit Lautsprechern oder einen Kopfhörerstecker einzustecken. Prinzipiell können Verstärker und Lautsprecher aber auch in die Audioanlage integriert sein.

Ebenso ist es bekannt, dass über eine sogenannte Zufallsfunktion von der Audioanlage selbst Musiktitel aus den Vorhandenen ausgewählt und abgespielt werden.

Bei einer Audioanlage bei der die Musiktitel beispielsweise im MP3-Format abgespeichert sind, ist es weiterhin möglich, dass die abgespeicherten Musiktitel auf sogenannte Features (deutsch: Merkmale) untersucht und daraufhin bewertet werden, ob dieser Musiktitel den vom Nutzer vorgegebenen Auswahlkriterien entspricht. Als derartige Features können unter anderem die Geschwindigkeit bzw. der Rhythmus des Musiktitels, die Tonfarbe, die verwendeten Musikinstrumente, verschiedene Tempiwechsel oder die Klangfülle oder sonstige für eine musikalische Darbietung charakteristische Merkmale verstanden werden.

Die Motion Picture Experts Group hat in dem MPEG-7 Protokoll, unter dem Begriff "Audio-Feature Extraction", einige Low Level Features definiert. Diese Low Level Features können u. a. zur Timbrebeschreibung verwendet werden.

Somit ist es möglich, einen Musiktitel ohne unmittelbaren Hinweis auf den Interpreten oder den Titel selbst zu beschreiben.

Zur Analyse bzw. Einteilung des Musiktitels, die in der Bewertungseinrichtung der Audioanlage vorgenommen wird, können dabei verschiedene Algorithmen verwendet werden, wobei auch beliebige neue Arten von Features erzeugt werden können. Bei einer Analyse bewertet eine Bewertungseinrichtung das Musikstück nur unter Anwendung oder Berechnung der Features. Es vergleicht nicht die Vorgabe des Nutzers mit der Bewertung. Der Nutzer gibt nicht die Features vor, sondern lediglich das Ergebnis der Berechnung. Features sind Berechnungsvorschriften. Sie berechnen physikalische Eigenschaften wie beispielsweise Frequenz, durchschnittliche Tonhöhe oder Geschwindigkeit. Der Nutzer gibt also etwas in der Art "Das Feature Geschwindigkeit soll im Bereich von 100-150 Beats pro Minute liegen" vor.

Als nachteilig hierbei ist jedoch anzusehen, dass ein Nutzer beispielsweise wenn er aus einem Kraftfahrzeug aussteigt und er in seiner Wohnung erneut Musik hören möchte, er der dort vorhandenen Stereoanlage oder einer sonstigen transportablen Audioanlage erst wiederum sein persönliches Nutzungsprofil bzw. die von ihm gewünschte Musik vorgeben muss. Dies kann insbesondere dazu führen, dass verschiedene Audioanlagen im Besitz eines Benutzers jeweils mit verschiedenen Vorgaben zur Auswahl von Musiktiteln versehen sind, so dass ein Nutzer eventuell Musiktitel hört, die er gar nicht wünscht.

### Darstellung der Erfindung, Aufgabe, Lösung, Vorteile

Ausgehend von diesem Stand der Technik liegt der Erfindung die Aufgabe zugrunde, eine Audioanlage zur Wiedergabe von Musiktiteln zu schaffen, deren automatisierte Auswahlkriterien für Musiktitel aus einem Datenspeicher in einfacher Weise veränderbar ist.

Diese Aufgabe wird durch die im Anspruch 1 angegebenen Merkmale gelöst.

Der Kerngedanke der Erfindung besteht darin, dass die in einem Datenspeicher hinterlegten Musiktitel, wobei diese beispielsweise im MP3-Format formatiert sind, in an sich bekannter Weise auf ihre sogenannten Features hin von der Audioanlage analysiert werden. Dies erfolgt in an sich bekannter Weise in einer Bewertungseinrichtung in der Audioanlage. Zusätzlich kann der Audioanlage aber eine Vorrichtung zur Vorgabe von Kriterien für eine Auswahl an Musiktiteln zugeordnet werden. Das bedeutet, dass in der Vorrichtung beispielsweise mit Hilfe eines Datensatzes diejenigen Kriterien oder Features hinterlegt sind, nach denen die im Datenspeicher hinterlegten Musiktitel ausgewählt und dem Nutzer über die Ausgabeeinrichtung wiedergegeben werden sollen. Somit kann der Nutzer, in dem er in der Vorrichtung den entsprechenden Datensatz hinterlegt, beispielsweise nur Musiktitel mit einem schnellen Rhythmus hören oder, wenn er die entsprechenden Einstellungen vorgenommen hat, nur Musiktitel mit einem häufigen Tempiwechsel. Dabei ist es selbstverständlich, dass die Vorrichtung lösbar mit der Audioanlage verbunden ist, um die Vorrichtung von einer entsprechend ausgestalteten Audioanlage zur anderen mit sich führen zu können. Die Datenübertragung von der Vorrichtung zu Audioanlage kann in an sich beliebiger Weise erfolgen, beispielsweise über eine elektrische Steckverbindung oder gegebenenfalls drahtlos, beispielsweise über eine Infrarot- oder Bluetooth-Schnittstelle.

Der Vorteil der Erfindung besteht darin, dass jede Audioanlage, die ein Nutzer zum Abspielen von Musik verwenden möchte, in einfacher Weise auf den persönlichen Geschmack des Nutzers eingestellt werden kann. Hierzu wird lediglich die Vorrichtung zur Vorgabe von Kriterien zur Auswahl von Musiktiteln mit der Audioanlage verbunden und daraufhin werden von der Audioanlage nur noch diejenigen Musiktitel aus dem Datenspeicher ausgewählt, die dem individuellen "Music Taste Fingerprint", d.h. dem persönlichen Musikgeschmack, des Nutzers entsprechen. Somit ist es beispielsweise bei einem Autoradio vermieden, dass ein Nutzer einen ihm unangenehmen Musiktitel hört und er hierdurch vom Verkehrsgeschehen abgelenkt wird.

Vorteilhafte Ausgestaltungen der Erfindung sind in den Unteransprüchen gekennzeichnet.

In einfacher Weise ist die Vorrichtung wie im Anspruch 1 angegeben ein transportabler Datenspeicher, wobei der Datenspeicher und die Audioanlage mit entsprechenden Schnittstellen versehen sind. Diese können beispielsweise eine elektrische Steckverbindung, oder eine drahtlose Verbindung beispielsweise eine Infrarot- oder Bluetooth-Schnittstelle sein. In einfacher Weise kann die Vorrichtung als Speicherkarte bzw. als USB-Stick ausgebildet sein, so dass die Vorrichtung mit den Daten bezüglich des persönlichen Musikgeschmacks des Nutzers von ihm als Schlüsselanhänger mitgeführt werden kann.

Gemäß einer anderen vorteilhaften Ausführungsform ist vorgesehen, dass der Nutzer eine Kopie seines "Music Taste Fingerprint" in der Audioanlage selbst ablegt bzw. dort einspeichert. In diesem Fall ist der Datenspeicher nicht notwendigerweise transportabel.

Um den Nutzungskomfort zu erhöhen ist im Anspruch 3 vorgeschlagen, dass in der Vorrichtung mehrere Daten- oder Parametersätze, sogenannte Profile zur Vorgabe unterschiedlicher Auswahlkriterien speicherbar sind. Somit können zum Einen mehrere Personen die Vorrichtung bzw. die damit ausgestatteten Stereoanlagen nutzen wobei jede Person ihr individuelles Nutzungsprofil in der Vorrichtung hinterlegt hat. Zur Auswahl des gewünschten Nutzungsprofils können diese z.B. auf einem Display angezeigt und ausgewählt werden. Ebenso ist es möglich, dass ein Nutzer verschiedene Nutzungsprofile beispielsweise für unterschiedliche Stimmungen oder äußere Umstände hinterlegt. Beispielsweise kann er für längere Autobahnfahrten die Auswahl anregender und rhythmischer Musiktitel zur Vermeidung von Ermüdungserscheinungen vorziehen und am Abend zur Entspannung eher langsamere Melodien auswählen.

Um mit der Zeit sich ändernde Vorlieben des Nutzers berücksichtigen zu können ist im Anspruch 4 gekennzeichnet, dass die in der Vorrichtung hinterlegten Daten verändert werden können. Dies kann beispielsweise dann erfolgen, wenn die Vorrichtung mit einer Audioanlage verbunden ist. Hierzu gibt der Nutzer über die Eingabeeinrichtung der Audioanlage sein neues Nutzungsprofil vor, das anschließend in der Vorrichtung gespeichert wird. Ein Nutzer muss nicht notwendigerweise sein Profil eingeben. Ein System, das das Profil anhand einer Bewertung oder eines andersgearteten Verfahren anpasst oder erstellt, ist ebenso möglich.

Hierzu ist im Anspruch 5 vorgeschlagen, dass beim Abspielen unterschiedlicher Musiktitel diese über eine Abfrage der Audioanlage durch den Nutzer bewertet werden, insbesondere daraufhin, ob er sie bald noch einmal hören möchte oder nicht. Mit Hilfe der Bildung einer derartigen Prioritätenliste kann von der Audioanlage die vom Nutzer gewünschte Musikrichtung anhand deren jeweiliger Features erkannt und weitere ähnliche Musiktitel aus dem Datenspeicher angeboten werden.

In gleicher Weise ist es möglich, dass wie im Anspruch 6 gekennzeichnet der Nutzer selbst neue Vorgaben eingibt.

Vorteilhafterweise kann auch vorgesehen werden, dass die in der Vorrichtung gespeicherten Kriterien / Features nicht unbedingt auch alle von einer Audioanlage ausgewertet werden bzw. ausgewertet werden können. Das heisst einige Audioanlagen können mehr oder werten mehr Informationen aus als andere einfache Audioanlagen. Trotzdem sollte die Vereinigungsmenge der Kriterien / Features in der erfindungsgemäßen Vorrichtung vorgehalten werden. So ist erreichbar, dass die erfindungsgemäße Audioanlage auch in unterschiedlichen Leistungsstufen eingesetzt werden kann und dass auch sehr unterschiedliche "Music Taste Fingerprint" auswertbar sind.

### Kurze Beschreibung der Zeichnungen

Eine Ausführungsform der Erfindung wird nachstehend anhand der Zeichnung näher erläutert. Es zeigt in rein schematischer Darstellung:

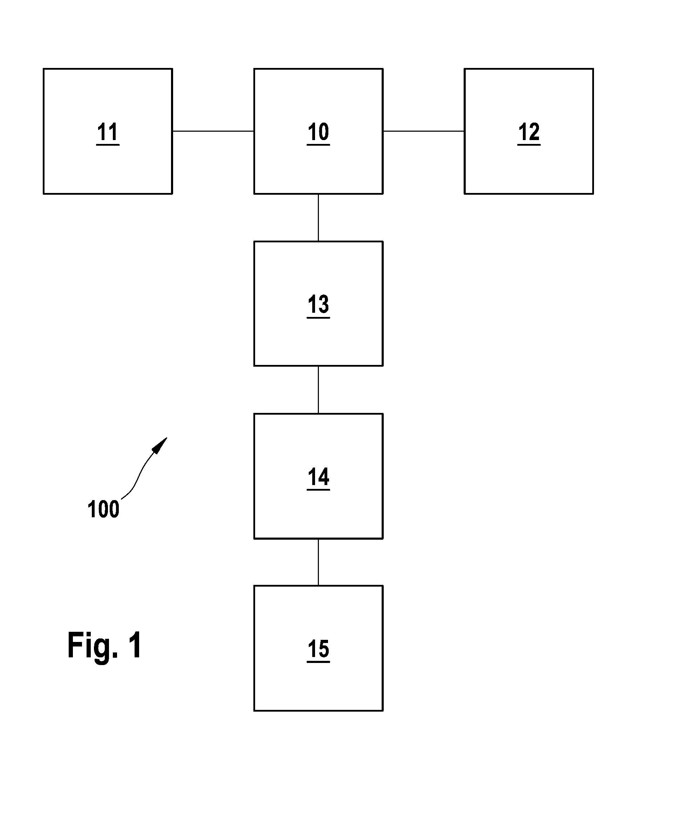

- Fig. 1: ein Blockschaltbild einer Audioanlage.

### Bester Weg zur Ausführung der Erfindung

Aus der schematischen Darstellung in Figur 1 ist eine Audioanlage 100 zur Wiedergabe von Musiktiteln schematisch ersichtlich. Die Audioanlage 100 kann beispielsweise ein Autoradio, eine Stereoanlage, ein transportabler CD-Player, ein MP3-Player oder ein PC mit Lautsprechern sein. Die Audioanlage 100 verfügt über einen Datenspeicher 10 in dem verschiedene Musiktitel, Sprachmitteilungen, Geräusche oder sonstige Audiodateien vorzugsweise im MP3-Format hinterlegt sind. Über eine Eingabeeinrichtung 11, beispielsweise eine auf einem Display abgebildete menügeführte Steuerung, kann ein Nutzer der Audioanlage 100 die von ihm gewünschten Musiktitel auswählen, die dann mit Hilfe einer Ausgabeeinrichtung 12 dem Nutzer wiedergegeben werden. Die Ausgabeeinrichtung 12 kann entweder lediglich in Form einer Schnittstelle beispielsweise für einen Verstärker mit Lautsprechern oder als Buchse für einen Stecker eines Kopfhörers ausgebildet sein.

Weiterhin ist in der Audioanlage 100 eine Bewertungseinrichtung 13 vorgesehen, mit der die Musiktitel auf ihre Features wie Rhythmus, Tonfarbe, verwendete Musikinstrumente, Tempiwechsel, Klangfülle oder dergleichen analysiert werden.

Dabei ist es möglich, dass der Nutzer über die Eingabeeinrichtung 11 die von ihm gewünschten Werte der Features oder Kriterien vorgibt, so dass nur Musiktitel der von ihm gewünschten Art wiedergegeben werden.

Weiterhin ist die Audioanlage 100 mit einer Vorrichtung 14 zur Vorgabe von Kriterien für eine Auswahl von Musiktiteln versehen. Diese Vorrichtung 14, u.a. eine Speicherkarte oder ein USB-Stick, kann mit der Audioanlage 100 verbunden werden. In der Vorrichtung 14 sind beispielsweise in Form eines Datensatzes die vom Nutzer gewünschten Wertebereiche ausgewählter Features der Musik, die er hören möchte, hinterlegt, wobei die Vorrichtung 14 derart mit der Audioanlage 100 in Wirkverbindung steht, dass von der Audioanlage 100 nur noch die dem in der Vorrichtung 14 hinterlegten Datensatz entsprechenden Musiktitel wiedergegeben werden.

Es versteht sich, dass, wie schematisch mit dem Bezugszeichen 15 angedeutet, in der Vorrichtung 14 hinterlegte Nutzerprofil entsprechend den Wünschen des Nutzers verändert werden kann. Ein solches Nutzerprofil kann auch als "Music Taste Fingerprint" bezeichnet werden. Hierzu kann er beispielsweise neue Kriterien für die Auswahl von Musiktiteln vorgeben oder er bewertet die von der Audioanlage 100 abgespielten Musiktitel.

## Patentansprüche

1. Audioanlage (100) zur Wiedergabe von Musiktiteln mit einem Datenspeicher (10) für die Musiktitel, einer Eingabeeinrichtung (11) zur Auswahl der Musiktitel, einer Bewertungseinrichtung (13) für die Musiktitel und einer Ausgabeeinrichtung (12) zur Wiedergabe der Musiktitel, **dadurch gekennzeichnet, dass** der Audioanlage (100) eine Vorrichtung (14) zur Vorgabe von Kriterien zur Auswahl von Musiktiteln zuordenbar ist.

2. Audioanlage nach Anspruch 1, **dadurch gekennzeichnet, dass** die Vorrichtung (14) ein transportabler oder fest mit der Audioanlage (100) verbundener Datenspeicher ist und die Audioanlage sowie der Datenspeicher mit einer entsprechenden Schnittstelle versehen sind.

3. Audioanlage nach Anspruch 1 oder 2, **dadurch gekennzeichnet, dass** in der Vorrichtung (14) mehrere Datensätze, so genannte Profile, zur Vorgabe unterschiedlicher Kriterien zur Auswahl der Musiktitel speicherbar sind.

4. Audioanlage nach einem der Ansprüche 1 bis 3, **dadurch gekennzeichnet, dass** ein in der Vorrichtung (14) gespeicherter Datensatz veränderbar ist.

5. Audioanlage nach Anspruch 4, **dadurch gekennzeichnet, dass** der Datensatz automatisch, beispielsweise durch die Bewertung eines Musiktitels, veränderbar ist.

6. Audioanlage nach Anspruch 4 oder 5, **dadurch gekennzeichnet, dass** die Profile durch neue Kriterien erweiterbar sind.
